# EUROPEAN PATENT SPECIFICATION

(11) **EP 1 564 935 B1**
(45) Date of publication and mention of the grant of the patent: **26.10.2011**
(21) Application number: 04102763.2
(22) Date of filing: 16.06.2004
(51) Int. Cl.: H04L 12/56

(54) **Method of dynamic adaptation for jitter buffering in packet networks**
Verfahren für die dynamische Anpassung von Jitter-Pufferung in Paketnetzwerken
Procédé d'adaptation dynamique pour le stockage basé sur la gigue dans les réseaux de paquets

(30) Priority: 16.02.2004 CA 2457812
(43) Date of publication of application: 17.08.2005
(73) Proprietor: Mitel Networks Corporation, Ottawa, ON K2K 2W7 (CA)
(72) Inventor: Schultz, Dieter, Ontario, Ontario LOA 1TO (CA); Dilkie, Lee, Ontario, Ontario K2S 1B8 (CA)
(74) Representative: Read, Matthew Charles

(56) References cited:
- US-A1- 2003 091 047
- US-B1- 6 658 027

## Description

### Field of the Invention

The present invention relates generally to digital transmission systems, and more particularly to a method for reducing perceived network jitter by varying the amount of delay induced by a jitter buffer in a packet network.

### Background of the Invention

In packet-switched voice communication, maximum voice quality is achieved when voice packets arrive in the order that they were transmitted, at the exact rate that they are transmitted, and with the shortest possible transmission delay. However, the nature of data transmission in packet-switched or IP networks inherently gives rise to transmission delays (i.e. jitter) that may vary widely due to available bandwidth, number of nodes traversed by the packets, network congestion, etc. Packets can also be duplicated by network switching equipment or dropped. In addition, as a consequence of packet routing policies that are commonly employed, it is also possible for packets to arrive at an endpoint in a different order than they were transmitted.

It is known in the art to use data buffers when receiving voice packets, to ameliorate the effects of network jitter. For example, US Patent No. 6,603,749, entitled Adaptive Buffer Management for Voice Over Packet network, by Andre Moskal and Andre Diorio, discloses a fixed length adaptive buffer, wherein the length of the buffer is a compromise between introduced delay and induced packet loss due to underflow or overflow. The fixed length adaptive buffer is effective on well-conditioned networks. However, on less well managed networks (e.g. jitter greater than 40 ms) such as the Internet, the jitter often exceeds the size of the buffer. Consequently, the buffer actually introduces additional packet loss.

Accordingly, much research has centered on methods that dynamically adapt the buffer length according to current network conditions. Dynamic jitter buffers reduce the effects of variable transmission delay by introducing additional delay at the packet receiver. This has the benefit of requiring no special consideration at the packet transmitter. Dynamic jitter buffers reduce perceived network jitter by varying the amount of delay induced by the jitter buffer according to detected changes in network transmission delay.

Several approaches in the literature use adaptation to dynamically adjust the buffer to current changes in network delay. Adaptation techniques include LMS, neural networks, and fuzzy logic. Other methods use state machines, as set forth in Dynamic Jitter Buffering for Voice-Over-IP and Other Packet-Based Communication Systems (US Patent Application No. 2003026275). Unfortunately, these tend to suffer from implementation complexities.

Other examples of prior methods for managing jitter buffers are disclosed in US 2003/0091047 A1, in which packet delay variation is estimated, based on high and low watermarks in the depth of a jitter absorption buffer and used to adjust the performance of the jitter absorption buffer, and US 6,658,027 B1, in which frames meeting specific criteria are deleted from a jitter buffer if a high water mark is exceeded and a silence frame is inserted if the jitter buffer is depleted beyond a low water mark.

### Summary of the Invention

According to the present invention, a method of controlling a buffer for reducing jitter in a packet network comprises:
a) receiving packets into said buffer;
b) draining packets from said buffer;
c) maintaining a count value of packets in said buffer;
d) maintaining at least a low watermark value representing a minimum of said count value over a time period;
e) once within each said time period setting said low watermark value equal to said count value;
f) maintaining a high watermark value representing a maximum of said count value over said time period; and
g) setting said high watermark value equal to said count value simultaneously with setting said low watermark value equal to said count value;
wherein said receiving comprises, for each packet, loading the packet into said buffer in correct sequence number position, incrementing said count value, if the count value exceeds the high watermark value then setting said high watermark value to said count value, and if said count value is less than the low watermark value then setting said low watermark value to said count value and said draining comprises:
i) obtaining a current Dequeue TimeStamp;
ii) calculating the difference between the current Dequeue TimeStamp and a previous Dequeue TimeStamp;
iii) if the difference is greater than a first predetermined time period, determining whether the buffer is empty then, if the buffer is not empty, generating a DequeueBuffer event and updating both the difference and Dequeue Time Stamp;
iv) if the buffer is empty, inserting data by invoking packet loss concealment and updating the Dequeue Time Stamp;
v) following step iv) or if the difference is not greater than the first predetermined time period, determining whether a second predetermined time period has elapsed since step e) was previously performed;
vi) if said second predetermined time period has elapsed, then if said low watermark exceeds a low watermark threshold, generating a DequeueBuffer event and incrementing a second count value;
vii) if said second predetermined time period has elapsed and said low watermark does not exceed said low watermark threshold and, then setting said high watermark and said low watermark to said count value; and
viii) following step vii) or if said second predetermined time period has not yet elapsed, determining whether the buffer is overflowing and, if the buffer is overflowing, generating a DequeueBuffer event;
wherein the DequeueBuffer event comprises, for each packet to be dequeued, dequeueing said packet from the buffer and decrementing said count value, and if the count value exceeds the high watermark value then setting the high watermark value to the count value, and if the count value is less than said low watermark value then setting the low watermark value to the count value.

The invention also provides a digital transmission system comprising a jitter buffer for a packet network, configured to control the jitter buffer by performing such a method.

In this manner, a simple, state-less adaptation control algorithm can be provided, with a fast attack and a slow decay time to track delay changes in the network. The principal function of the algorithm for controlling the jitter buffer is to minimize the delay within the buffer (at the expense of occasional buffer underflow). Traditionally, jitter buffers attempt to smooth out jitter by preventing underflow, whereas minimizing the delay within the buffer is a secondary consideration. Although such prior art buffers prevent more underflow errors than the system of the present invention, they tend to introduce longer delays. For example, the fixed buffer discussed above in connection with U.S. Patent Application No. 6,603,749, is an example of a buffer control algorithm that maintains an average midpoint within the buffer.

### Brief Description of the Drawings

An embodiment of the present invention will now be described, by way of example only, with reference to the attached Figures, wherein:
Figure 1 is a schematic representation of an adaptive jitter buffer according to the present invention;
Figures 2A, 2B and 2C are flowcharts showing steps for enqueueing and dequeueing data into and out of the jitter buffer of Figure 1, including adjustment of watermark levels governing the rate of dequeueing data based on network conditions, according to the present invention; and
Figure 3 is a diagram showing an example of the buffer contents over time, including the adjustment of watermark levels, according to the present invention.

### Detailed Description of the Invention

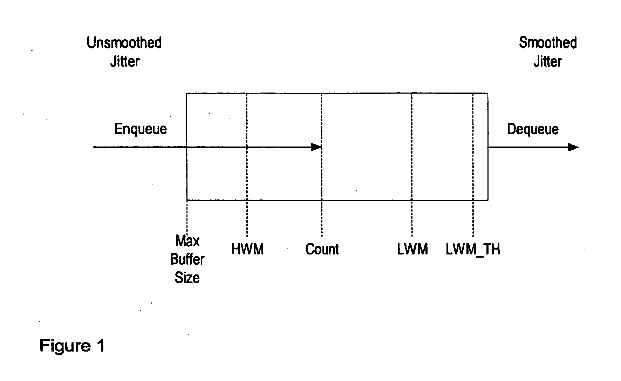

Figure 1 shows an adaptive jitter buffer according to the present invention, for enqueueing data packets that have been subjected to unsmoothed jitter and dequeueing the data at a steady rate so that the dequeued data is subjected to smoothed jitter. The total number of packets capable of being stored in the buffer is represented by the maximum buffer size, while the minimum number of packets is LWM_TH. The "count" gives the number of packets in the buffer at any time, while the low water mark (LWM) indicates how far the buffer is away from underflow, and the high water mark (HWM) tracks the delay within the buffer.

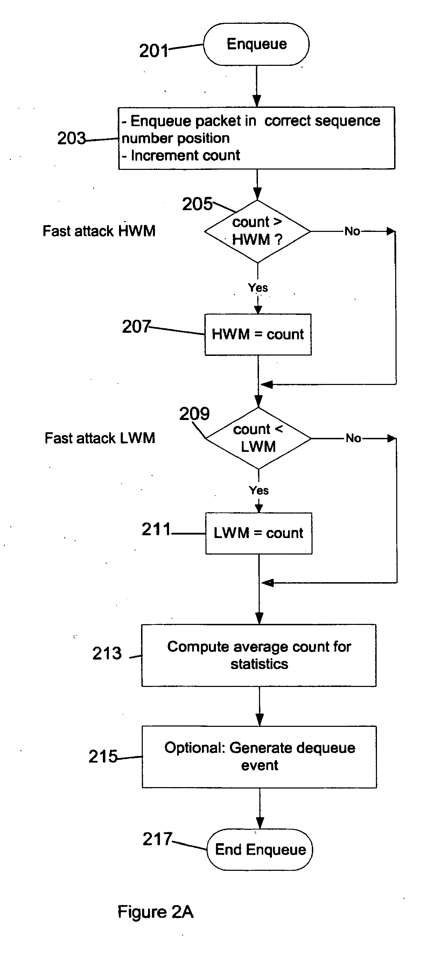

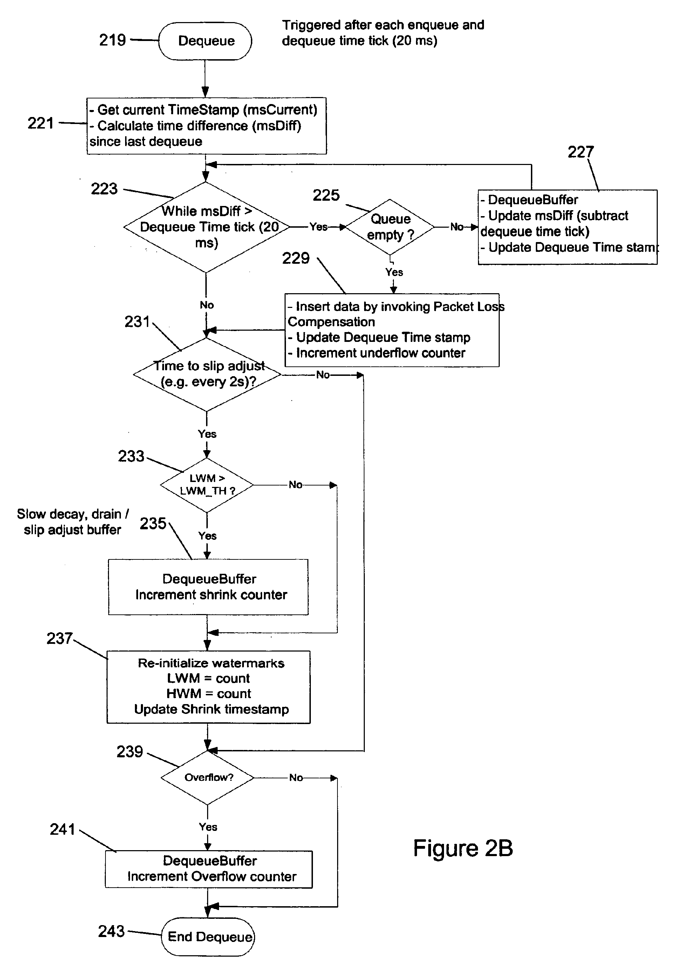

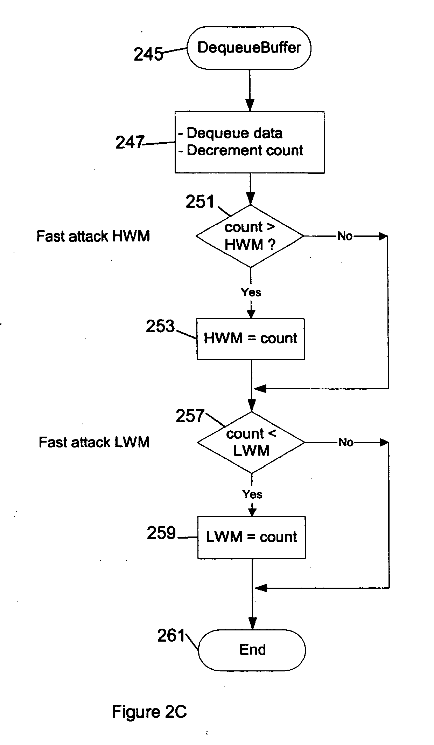

Turning to Figure 2, upon receipt of a data packet an Enqueue event is initiated (step 201 of Figure 2A). The received packet is loaded into the buffer in correct sequence number position, and "count" is incremented to reflect the current number of packets (step 203).

If count exceeds HWM then HWM is set to count (step 205). If the count does not exceed HWM, or after step 205, a determination is made as to whether count is less than LWM (step 209). If it is, then LWM is set to count (step 211). If count is not less than LWM, or after step 211, the average count is computed for statistics purposes (step 213).

Optionally, a dequeue event (Figure 2B) is generated (step 215), and the Enqueue process ends (step 217).

The Enqueue event may be implemented in software as follows:

```
     Enqueue
   For every packet
       Enqueue packet in correct seq num position
       Increment count // number of packets in queue

       /* Adjust watermarks, if required (fast attack) */
       IF count > HWM
           HWM = count // adjust HWM
       ENDIF

       IF count < LWM
           LWM = count
       ENDIF

       Average current count in buffer
   ENDFOR
```

A Dequeue event (Figure 2B) may be generated after each Enqueue (step 215), and is generated in any event each Dequeue Time Tick (e.g. 20 ms).

First, the current Dequeue TimeStamp (msCurrent) is obtained and the difference (msDiff) between the current and previous TimeStamps is calculated, representing the time since the last Dequeue event (step 221).

If msDiff is greater than the Dequeue Time Tick, a determination is made as to whether the buffer is empty (step 225). If not, a DequeueBuffer event is generated (Figure 2C), and both msDiff and Dequeue Time Stamp are updated.

If the buffer is empty (indicating an underflow condition), data is inserted into the packet stream by invoking well known packet loss concealment, an underflow counter is incremented and the Dequeue Time Stamp is updated (step 229).

If msDiff is not greater than the Dequeue Time Tick, or after step 229, a determination is made as to whether a predetermined time period (e.g. 2s) has elapsed since the last slip adjust (step 231).

If yes, then if LWM exceeds LWM_TH (step 233), then a DequeueBuffer event is generated and a shrink counter is incremented (step 235). Next, or if LWM does not exceed LWM_TH, then the watermarks are re-initialized to the count value and a Shrink timestamp is updated (step 237).

If the time to slip adjust has not yet elapsed (step 231), or in any event after step 237, a determination is made (step 239) as to whether the buffer is overflowing (i.e. count>max buffer size). If yes, a DequeueBuffer event is generated and an Overflow Counter is incremented (step 241)

If the buffer is not overflowing, or in any event after step 241, the Dequeue event ends (step 243).

The Dequeue event may be implemented in software as follows: Dequeue

```
    FOR every enqueue or 20ms tick // JB dequeue triggered
        Get current time stamp
        Calculate time difference (msDiff) since last dequeue
        WHILE msDiff > 20ms
            DequeueBuffer
            IF queue empty,
               Save current dequeue time
               Increment underflow counter
               break out
            END
            msDiff = msDiff - 20ms
            Update current dequeue time
        END WHILE

        // Check whether we have to slip adjust or are still in
    overflow
        FOR every jitter_Q_shrink_rate (currently 2s) time event
            IF LWM > LWM_TH (currently 1) (slow drain, deacy)
               DequeueBuffer // dequeue another packet, slip adjust
                   Increment shrink counter
            ENDIF

            /* Re-initialize watermarks */
            LWM = count
            HWM = count

            Update shrink Timestamp
        ENDFOR

        IF num of packets > Jitter size // Overflow checked on
     every enqueue and dequeue tick
            DequeueBuffer // Dequeue another packet
            Increment overflow counter
        ENDIF
     ENDFOR
```

The DequeueBuffer event (Figure 2C) governs the unloading of packets from the buffer. Following instantiation of the DequeueBuffer event (step 245), the data packets or dequeued from the buffer and count is decremented accordingly (step 247).

If count exceeds HWM, then HWM is set to count (step 253). If not, and in any event after step 253, a determination is made (step 257) as to whether count is less than LWM. If yes, then LWM is set to count. If count is not less than LWM, and in any event after step 253, then the DequeueBuffer event ends (step 261).

The Dequeue event may be implemented in software as follows:

```
   DequeueBuffer
    BEGIN
       Dequeue data
       Decrement count // number of packets in queue

       /* Adjust watermarks, if required (fast attack) */
       IF count > HWM
           HWM = count // adjust HWM
       ENDIF

       IF count < LWM
           LWM = count
       ENDIF
    END
```

From the foregoing description, it is apparent that the algorithm for controlling enqueueing and dequeueing of data packets according to the present invention minimizes the delay within the buffer by using a quick 'attack', at the expense of preventing buffer underflow. Since it is very difficult to predict network behavior, control of the buffer is biased towards introducing a minimum delay by adapting quickly to large jitter events and by inserting additional packets using packet loss concealment during buffer underflow. After a large jitter event, the buffer contains several packets and the delay introduced by the buffer is equivalent to the jitter length. When network conditions normalize, the delay within the buffer is far larger than is required (i.e. the actual current jitter is smaller than the buffer delay). The buffer is drained slowly (at the slip or drain rate, currently set at 2s). Consequently, control of the buffer is characterized by a slow decay time.

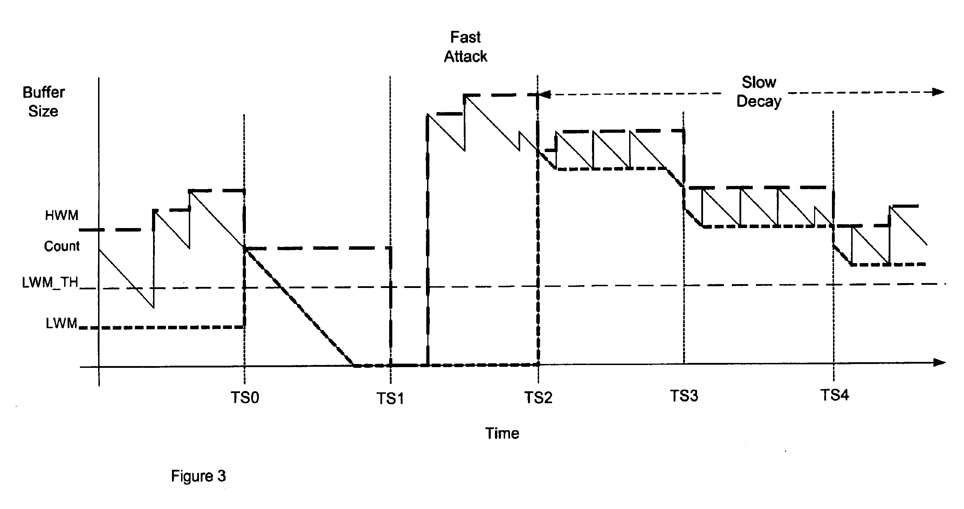

Figure 3 shows typical behaviour of the buffer under the enqueue and dequeue control algorithms of Figure 2, including adjustment of watermark levels over time. It will be noted that the buffer control is dependent only on the low water mark (LWM), and that data is inserted when the buffer is in underflow (count = 0 and LWM = 0). The draining of data occurs at the drain rate when count exceeds LWM. The high water mark (HWM) is tracked for statistics purposes only, and is not used to control the buffer.

It will also be noted from Figure 3 that after a network congestion event, which forces the buffer into underflow (just prior to time stamp TS1), the buffer accepts all data after the congestion disappears (fast attack following TS1). Then, slowly over time, the delay is again drained out of the buffer (TS2, TS3, TS4). Normal operation (no attack, no drain) is when the LWM returns to below LWM_TH.

It will be appreciated that, although embodiments of the invention have been described and illustrated in detail, various modifications and changes may be made.

In one alternative method, outside the scope of the present invention, the number of packets (count) is averaged within the Enqueue event and the watermarks are adjusted relative to this average value. Specifically, the LWM is adjusted upwardly if the average count exceeds LWM, and the high water mark is adjusted downwardly if the average count is less than HWM. In other words, the watermarks decay towards the average count in the buffer.

According to an alternative embodiment, the decay adjustment may be performed during the Dequeue event, on every slip adjust event, in which case no average count is calculated.

Also, different drain strategies can be used than as set forth herein. For example, a faster drain rate may be used when the delay within the buffer is long and a slower rate used when the delay is short. Also, since the high water mark is an indication of the delay within the buffer, it can be used as well in controlling the buffer.

Different implementations may be made by those familiar with the art, without departing from the scope of the invention as set forth in the claims appended hereto.

## Claims

1. A method of controlling a buffer for reducing jitter in a packet network comprising:
a) receiving packets into said buffer;
b) draining packets from said buffer;
c) maintaining a count value of packets in said buffer;
d) maintaining at least a low watermark value representing a minimum of said count value over a time period;
e) once within each said time period setting said low watermark value equal to said count value (237);
f) maintaining a high watermark value representing a maximum of said count value over said time period; and
g) setting said high watermark value equal to said count value simultaneously with setting said low watermark value equal to said count value (237);
wherein said receiving comprises, for each packet, loading the packet into said buffer in correct sequence number position (203), incrementing said count value (203), if the count value exceeds the high watermark value then setting said high watermark value to said count value (205, 207), and if said count value is less than the low watermark value then setting said low watermark value to said count value (209, 211);
**characterized by:**
said draining comprising:
i) obtaining a current Dequeue TimeStamp (221);
ii) calculating the difference between the current Dequeue TimeStamp and a previous Dequeue TimeStamp (221);
iii) if the difference is greater than a first predetermined time period, determining whether the buffer is empty (223, 225) and, if the buffer is not empty, generating a DequeueBuffer event and updating both the difference and Dequeue Time Stamp (227);
iv) if the buffer is empty, inserting data by invoking packet loss concealment and updating the Dequeue Time Stamp (229);
v) following step iv) or if the difference is not greater than the first predetermined time period, determining whether a second predetermined time period has elapsed since step e) was previously performed (231);
vi) if said second predetermined time period has elapsed, then if said low watermark exceeds a low watermark threshold, generating a DequeueBuffer event and incrementing a second count value (233, 235);
vii) if said second predetermined time period has elapsed and said low watermark does not exceed said low watermark threshold, then setting said high watermark and said low watermark to said count value (237); and
viii) following step vii) or if said second predetermined time period has not yet elapsed, determining whether the buffer is overflowing and, if the buffer is overflowing, generating a DequeueBuffer event (239, 241);
wherein said DequeueBuffer event comprises, for each packet to be dequeued, dequeueing said packet from the buffer (247) and decrementing said count value, and if the count value exceeds the high watermark value then setting the high watermark value to the count value (251, 253), and if the count value is less than said low watermark value then setting the low watermark value to the count value (257, 259).

2. A digital transmission system comprising a jitter buffer for a packet network, configured to control the jitter buffer by performing a method according to claim 1.

## Patentansprüche

1. Verfahren zum Steuern eines Puffers zur Reduzierung von Jitter in einem Paketnetzwerk, umfassend:
a) Empfangen von Paketen in dem Puffer;
b) Leeren der Pakete aus dem Puffer;
c) Beibehalten eines Paketzählwertes in dem Puffer;
d) Beibehalten wenigstens eines Niedrigwasserzeichenwertes, welcher ein Minimum des Zählwertes über ein Zeitintervall darstellt;
e) Einstellen des Niedrigwasserzeichenwertes einmal innerhalb jedes Zeitintervalls derart, dass er mit dem Zählwert gleich ist (237);
f) Beibehalten eines Hochwasserzeichenwertes, welcher ein Maximum des Zählwertes über das Zeitintervall darstellt; und
g) Einstellen des Hochwasserzeichenwertes derart, dass er mit dem Zählwert gleich ist, gleichzeitig mit dem Einstellen des Niedrigwasserzeichenwertes derart, dass er mit dem Zählwert gleich ist (237);
wobei das Empfangen für jedes Paket Laden des Paketes in den Puffer in einer richtigen Sequenznummerposition (203), Inkrementieren des Zählwertes (203), falls der Zählwert den Hochwasserzeichenwert übersteigt, dann Einstellen des Hochwasserzeichenwertes auf den Zählwert (205, 207) und, falls der Zählwert niedriger als der Niedrigwasserzeichenwert ist, dann Einstellen des Niedrigwasserzeichenwertes auf den Zählwert (209, 211) umfasst;
**dadurch gekennzeichnet, dass:**
das Leeren umfasst:
i) Erhalten eines gegenwärtigen Warteschlangenentnahmezeitstempels (221);
ii) Berechnen der Differenz zwischen dem gegenwärtigen Warteschlangenentnahmezeitstempel und einem vorhergehenden Warteschlangenentnahmezeitstempel (221);
iii) falls die Differenz größer als ein erstes vorbestimmtes Zeitintervall ist, Bestimmen, ob der Puffer leer ist (223, 225) und, falls der Puffer nicht leer ist, Erzeugen eines Warteschlangenentnahmepufferereignisses und Aktualisieren der Differenz und des Warteschlangenentnahmezeitstempels (227);
iv) falls der Puffer leer ist, Einfügen von Daten durch Aufrufen einer Paketverlustverdeckung und Aktualisieren des Warteschlangenentnahmezeitstempels (229);
v) Folgen des Schrittes iv) oder, falls die Differenz nicht größer als das erste vorbestimmte Zeitintervall ist, Bestimmen, ob ein zweites vorbestimmtes Zeitintervall abgelaufen ist, seitdem Schritt e) vorher durchgeführt wurde (231);
vi) falls das zweite vorbestimmte Zeitintervall abgelaufen ist, dann, falls das Niedrigwasserzeichen einen Niedrigwasserzeichenschwellwert übersteigt, Erzeugen eines Warteschlangenentnahmepufferereignisses und Inkrementieren eines zweiten Zählwertes (233, 235);
vii) falls das zweite vorbestimmte Zeitintervall abgelaufen ist und das Niedrigwasserzeichen den Niedrigwasserzeichenschwellwert nicht übersteigt, dann Einstellen des Hochwasserzeichens und des Niedrigwasserzeichens auf den Zählwert (237); und
viii) Folgen des Schrittes vii) oder, falls das zweite vorbestimmte Zeitintervall noch nicht abgelaufen ist, Bestimmen, ob der Puffer überläuft, und, falls der Puffer überläuft, Erzeugen eines Warteschlangenentnahmepufferereignisses (239, 241);
wobei das Warteschlangenentnahmepufferereignis für jedes aus der Warteschlange zu entnehmende Paket Entnehmen des Paketes aus der Warteschlange des Puffers (247) und Dekrementieren des Zählwertes und, falls der Zählwert den Hochwasserzeichenwert übersteigt, dann Einstellen des Hochwasserzeichenwertes auf den Zählwert (251, 253) und, falls der Zählwert niedriger als der Niedrigwasserzeichenwert ist, dann Einstellen des Niedrigwasserzeichenwertes auf den Zählwert (257, 259) umfasst.

2. Digitales Übertragungssystem, umfassend einen Jitterpuffer für ein Paketnetzwerk, das dazu ausgelegt ist, den Jitterpuffer durch Ausführen eines Verfahrens nach Anspruch 1 zu steuern.

## Revendications

1. Procédé de commande d'un tampon pour réduire la gigue dans un réseau de paquets, comprenant les étapes consistant à:
a) recevoir des paquets dans ledit tampon ;
b) drainer des paquets dudit tampon ;
c) maintenir une valeur de compte de paquets dans ledit tampon ;
d) maintenir au moins une valeur de filigrane bas représentant un minimum de ladite valeur de compte sur une période de temps ;
e) une fois dans chaque dite période de temps, régler ladite valeur de filigrane bas à une valeur égale à ladite valeur de compte (237) ;
f) maintenir une valeur de filigrane haut représentant un maximum de ladite valeur de compte sur ladite période de temps ; et
g) régler ladite valeur de filigrane haut à une valeur égale à ladite valeur de compte simultanément avec le réglage de ladite valeur de filigrane bas à une valeur égale à ladite valeur de compte (237) ;
dans lequel ladite étape consistant à recevoir comprend, pour chaque paquet, l'étape consistant à charger le paquet dans ledit tampon à la position de numéro de séquence correcte (203), incrémenter ladite valeur de compte (203), si la valeur de compte dépasse la valeur de filigrane haut, régler alors ladite valeur de filigrane haut à ladite valeur de compte (205, 207), et si ladite valeur de compte est inférieure à la valeur de filigrane bas, régler alors ladite valeur de filigrane bas à ladite valeur de compte (209, 211) ;
**caractérisé par** :
ledit drainage comprenant les étapes consistant à:
i) obtenir un horodatage de retrait de file d'attente (221) actuel ;
ii) calculer la différence entre l'horodatage de retrait de file d'attente actuel et un horodatage de retrait de file d'attente (221) précédent ;
iii) si la différence est supérieure à une première période de temps prédéterminée, déterminer si le tampon est vide (223, 225) et, si le tampon n'est pas vide, générer un événement de retrait de file d'attente de tampon DequeueBuffer et actualiser à la fois la différence et l'horodatage de retrait de file d'attente (227) ;
iv) si le tampon est vide, insérer des données en invoquant la dissimulation de perte de paquet et actualiser l'horodatage de retrait de file d'attente (229) ;
v) à la suite de l'étape iv) ou si la différence n'est pas supérieure à la première période de temps prédéterminée, déterminer si une deuxième période de temps prédéterminée s'est écoulée depuis que l'étape e) a été précédemment effectuée (231) ;
vi) si ladite deuxième période de temps prédéterminée s'est écoulée, alors, si ledit filigrane bas dépasse un seuil de filigrane bas, générer un événement de retrait de file d'attente de tampon DequeueBuffer et incrémenter une deuxième valeur de compte (233, 235) ;
vii) si ladite deuxième période de temps prédéterminée s'est écoulée et que ledit filigrane bas ne dépasse pas ledit seuil de filigrane bas, régler alors ledit filigrane haut et ledit filigrane bas à ladite valeur de compte (237) ; et
viii) à la suite de l'étape vii) ou si ladite deuxième période de temps prédéterminée ne s'est pas encore écoulée, déterminer s'il y a un trop plein du tampon et, s'il y a un trop plein du tampon, générer un événement de retrait de file d'attente de tampon DequeueBuffer (239, 241) ;
dans lequel ledit événement de retrait de file d'attente de tampon DequeueBuffer comprend, pour chaque paquet à retirer de la file d'attente, les étapes consistant à retirer ledit paquet de la file d'attente du tampon (247) et à décrémenter ladite valeur de compte, et si la valeur de compte dépasse la valeur de filigrane haut régler alors la valeur de filigrane haut à la valeur de compte (251, 253), et si la valeur de compte est inférieure à ladite valeur de filigrane bas régler alors de la valeur de filigrane bas à la valeur de compte (257,259).

2. Système de transmission numérique comprenant un tampon à gigue pour un réseau de paquets, configuré pour commander le tampon à gigue en mettant en oeuvre un procédé selon la revendication 1.
